# EUROPÄISCHE PATENTSCHRIFT

(11) **EP 0 658 770 B1**
(45) Veröffentlichungstag und Bekanntmachung des Hinweises auf die Patenterteilung: **08.10.1997**
(21) Anmeldenummer: 94118452.5
(22) Anmeldetag: 24.11.1994
(51) Int. Cl.: G01P 1/02, G01P 15/125

(54) **Verfahren zum Abdichten herstellprozessbedingter Öffnungen an mikromechanischen Beschleunigungssensoren**
Method for sealing fabrication-related openings in micromachined accelerometers
Procédé pour boucher des ouvertures nécessaires au processus de fabrication dans des capteurs d'accélération micro-usinés

(30) Priorität: 16.12.1993 DE 4342890
(43) Veröffentlichungstag der Anmeldung: 21.06.1995
(73) Patentinhaber: Mannesmann VDO AG, 60326 Frankfurt (DE)
(72) Erfinder: Schreiber-Prillwitz, Wolfgang, Dipl.-Phys., D-78056 Villingen-Schwenningen (DE); Plankenhorn, Horst, Dipl.-Ing. (FH), D-78048 Villingen-Schwenningen (DE)

(56) Entgegenhaltungen:
- EP-A- 0 551 616
- US-A- 5 243 861

## Beschreibung

Die Erfindung betrifft ein Verfahren zum Abdichten herstellprozeßbedingter Öffnungen an mikromechanischen Beschleunigungssensoren, welche als Differentialkondensatoren in Form eines Glas-Silizium-Glas-Schichtpaketes hergestellt sind, wobei der Pendelmasse eines aus der elektrisch leitend dotierten Siliziumschicht herausstrukturierten Biegeschwingers auf den innenliegenden Flächen der Glasschichten Gegenelektroden zugeordnet sind, welche mittels gleichflächig angebrachten Leiterbahnen mit außerhalb des Pendelraumes ausgebildeten Anschlußkontakten elektrisch leitend verbunden sind, wobei in der den Pendelraum umgebenden Siliziumschicht Öffnungen bzw. relativ flache Freisparungen ausgebildet sind, welche einem kurzschlußsicheren Herausführen der Leiterbahnen aus dem Pendelraum dienen.

Bei mikromechanischen Beschleunigungssensoren basiert die Beschleunigungsmessung in der Regel auf einer kapazitiven Abstandsmessung zwischen den feststehenden Elektroden und der beweglichen Elektrode, das heißt der Pendelmasse des Biegeschwingers. Das Meßprinzip zeichnet sich bekanntlich durch eine hohe Empfindlichkeit aus, wobei durch Anwendung des Differentialmeßverfahrens temperaturbedingte Meßfehler durch Eigenkompensation eliminierbar sind und eine zufriedenstellende Linearität erzielt wird. Die meßwertabhängigen Kapazitätsänderungen sind jedoch sehr klein, ebenso die im 100stel mm-Bereich liegenden Spalte zwischen der Pendelmasse des Biegeschwingers und den feststehenden Elektroden. Finden demzufolge Beschleunigungssensoren der gattungsgemäßen Art mit einer für die Großserienherstellung vorteilhaften Architektur, bei welcher der Pendelraum über Freisparungen mit der Außenatmosphäre in Verbindung steht, ungeschützt, insbesondere im Kraftfahrzeugmilieu Anwendung, so besteht durch Verschmutzung des Pendelraumes, vor allem aber durch Betauung, das heißt durch kondensierende oder ausfrierende Feuchtigkeit die Gefahr nicht nur einer Beeinträchtigung der Meßgenauigkeit sondern eines Totalausfalls der Beschleunigungssensoren.

Dementsprechend ist es bekannt, den gattungsgemäßen Beschleunigungssensor auf einem geeigneten Trägerelement zusammen mit Mitteln einer Signalaufbereitungsschaltung zu befestigen und mittels vorzugsweise einer Metallkappe hermetisch zu kapseln, wobei die Metallkapsel in einer Schutzgasatmosphäre mit dem Träger verschweißt wird. Dadurch wird zwar ein problemlos handels- und handhabungsfähiges Geberelement geschaffen, der hierfür erforderliche Fertigungsaufwand ist jedoch durch die Herstellung eines speziellen Gehäuses und dessen Verbindungstechnik sowie durch das isolierte Einbetten von Kontaktstiften in den Träger und deren Kontaktierung mit dem Sensor bzw. der Signalaufbereitungsschaltung erheblich. Das auf diese Weise erfolgende Verschließen des Beschleunigungssensors erfordert somit eine Vielzahl von Fertigungsschritten und zwar Fertigungsschritte, die bezüglich der Herstellung des Sensors nicht mehr prozeßgerecht sind. Außerdem sind eine relativ lange Schweißnaht hermetisch dicht auszubilden und am Einbauort, das heißt auf einer Leiterplatte eines Gerätes den für das relativ großflächige Geberelement erforderlichen Platz sowie die Kontaktverbindungen bereitzustellen.

US-A-5 243 861 beschreibt zwei Möglichkeiten, die Öffnungen zum Herausführen der Leiterbahnen aus dem Pendelraum im der Siliziumschicht eines Beschleunigungssensors abzudichten. In einem Ausführungsbeispiel ist die Öffnung in der Siliziumschicht mit einer sägezahnförmigen Struktur versehen, welche beim Verbinden der Siliziumschicht mit dem beiden Glasdeckplatten auf die Leiterbahn gepresst wird und so die Öffnung verschliesst. In einem anderen Ausführungsbeispiel wird im einem Hohlraum oberhalb den Öffnung im der Siliziumschicht ein Isolier material eingebracht, welches nach dem Verbinden der Siliziumschicht mit dem beiden Glasdeckplatten die Öffnung abdichtet.

Die Aufgabe der vorliegenden Erfindung bestand somit darin, einen gattungsgemäßen Beschleunigungssensor mit möglichst geringem Aufwand und mit in der Großserie produzierbaren Maßnahmen abzudichten.

Die Lösung der Aufgabe beschreibt der Anspruch 1. Der abhängige Anspruch betrifft eine vorteilhafte Maßnahme zur Durchführung des Verfahrens gemäß dem Anspruch 1.

Die gefundene Lösung zeichnet sich insbesondere dadurch aus, einen Beschleunigungssensor gemäß dem Oberbegriff des Patentanspruchs, der mit einem Minimum an Prozeßaufwand hergestellt ist, ohne weitere bauliche Maßnahmen abzudichten. Dadurch wird der mit einer Kapselung verbundene Aufwand vermieden und ein unmittelbares Anordnen des Beschleunigungssensors auf einer in ein Gerät einsetzbaren Leiterplatte ermöglicht.

Von entscheidender Bedeutung ist ferner die Erkenntnis, einen mittels UV-Licht aushärtbaren Klebstoff als Dichtungsmaterial zu verwenden. Dabei wird einerseits die klebstofftypische Eigenschaft einer guten Benetzung der für den Beschleunigungssensor verwendeten Materialien für eine selbsttätige Verteilung des Klebstoffes und das Verschließen der Freisparungen durch kapillare Effekte genutzt, andererseits kann der Verteilungsprozeß verhältnismäßig kurzzeitig durch Belichten des Klebstoffes gestoppt werden.

Vorteilhaft ist ferner, daß sich das Abdichten der Beschleunigungssensoren in deren Herstellungsprozeß eingliedern läßt in dem unmittelbar nach dem Vereinzeln der Beschleunigungssensoren diese zunächst evakuiert und nachfolgend in einer N₂-Atmospähre in einer geeigneten Vorrichtung magaziniert und einem Klebstoffdispenser zugeführt werden. Nach dem Aufbringen einer definierten Klebstoffmenge, beispielsweise 0,5 mm³, wird nach einer experimentell ermittelten Verteilzeit des Klebstoffs von beispielsweise 2 Minuten der vom Klebstoff benetzte Bereich ca. 5 Sekunden lang belichtet. Während der Verteilzeit des Klebstoffs, die mit der Prozeßtemperatur in gewissen Grenzen steuerbar ist, bleiben die Beschleunigungssensoren vorteilhafterweise in dem entsprechend gestalteten Magazin, das im Takt der Klebstoffanbringung fortschaltbar ist, gehaltert.

Im folgenden sei die Erfindung anhand der beigefügten Zeichnungen näher erläutert. Es zeigen:
Fig. 1 eine perspektivische Darstellung des Beschleunigungssensors der gattungsgemäßen Art nach dem Vereinzeln aus einem Glas-Silizium-Glas-Schichtpaket,
Fig. 2 eine Seitenansicht des in Fig. 1 dargestellten Beschleunigungssensors im Augenblick der Klebstoffzufuhr,
Fig. 3 eine Draufsicht des Beschleunigungssensors, bei welchem die deckende Glasplatte und die Pendelmasse teilweise ausgebrochen sind.

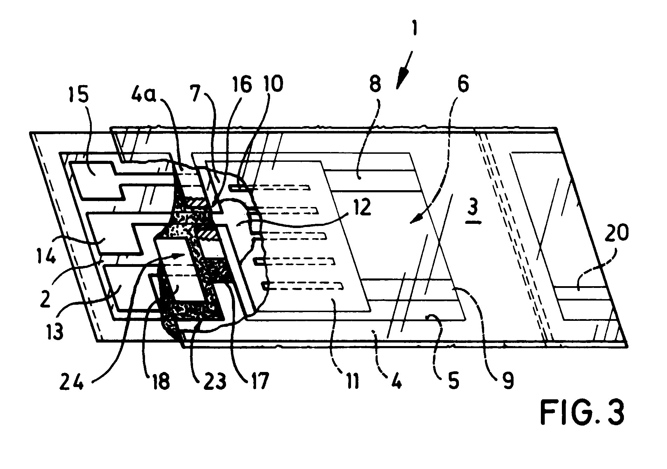

Einleitend sei zunächst der Aufbau des Beschleunigungssensors 1 beschrieben. Die insbesondere aus der Fig. 3 ersichtlichen rautenförmigen Konturen des Beschleunigungssensors 1 lassen erkennen, daß für die Herstellung des Beschleunigungssensors 1 ein bzw. einer Vielzahl gleicher Beschleunigungssensoren eine 110-orientierte Siliziumscheibe verwendet worden ist. Dadurch lassen sich die Vorteile der anisotropen Ätztechnik, nämlich ein erheblich schnelleres Ätzen rechtwinklig zur Schichtfläche nutzen. Der Vollständigkeit halber sei erwähnt, daß zum Vereinzeln der Beschleunigungssensoren aus einem verbondeten Glas-Silizium-Glas-Schichtpaket an diesem durch geeignetes kreuzweises Einschneiden Sollbruchstellen geschaffen werden und nachfolgend das Schichtpaket durch Abdrücken beispielsweise auf einer elastischen Unterlage zerbrochen wird.

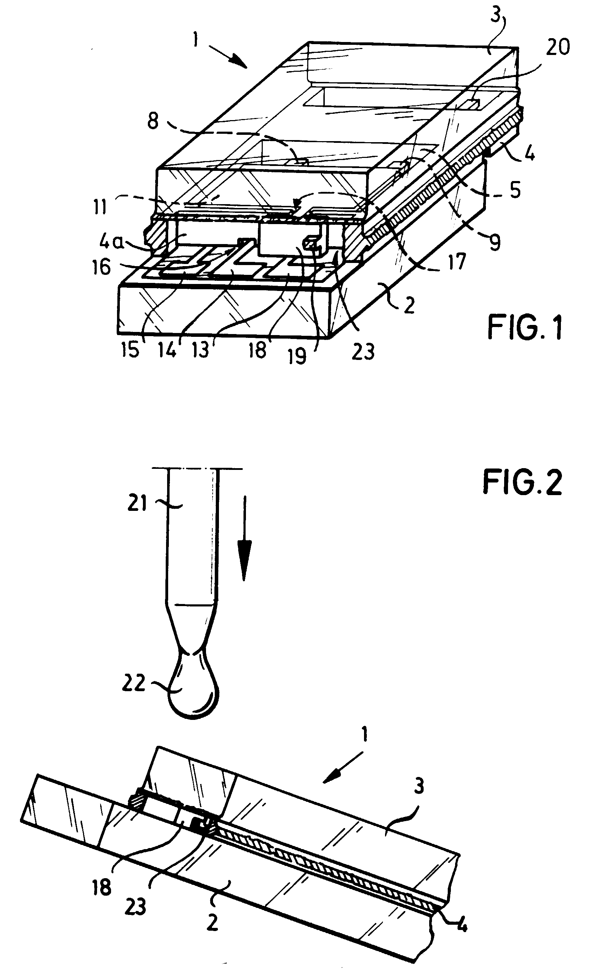

Bei dem in Fig. 1 dargestellten Beschleunigungssensor 1 sind die Bruchflächen schraffiert dargestellt. Mit 2 und 3 sind Platten aus Pyrex-Glas bezeichnet, die mit einem Rahmen 4 aus Silizium verbondet sind. Die Glasplatten 2 und 3 decken einen aus der ehemals geschlossenen Silizium-Schicht herausstrukturierten Pendelraum 5 sowie einen beschleunigungssensitiven Biegeschwinger 6 ab, dessen Pendelmasse 7 mittels federungsfähig ausgebildeter Arme 8 und 9 mit dem Rahmen 4 in Verbindung steht. In der Pendelmasse 7 angebrachte Schlitze, von denen einer mit 10 bezeichnet ist, dienen der Optimierung des Frequenzverhaltens des Biegeschwingers 6 mit dem Ziel einer annähernd aperiodischen Dämpfung und somit einer Verkürzung der Ansprechzeit. Der Pendelmasse 7, die, da die Silizium-Schicht elektrisch leitfähig dotiert ist, als bewegliche Elektrode dient, sind an den Innenflächen der Glasplatten 2 und 3 deckungsgleich Gegenelektroden 11 und 12 zugeordnet. Letztere bestehen vorzugsweise aus Aluminium und sind durch Aufdampfen angebracht. Die elektrische Verbindung der Gegenelektroden 11 und 12 mit von außen zugänglichen Anschlußkontakten 13 und 14 des Beschleunigungssensors 1 erfolgt über gleichflächig mit den Gegenelektroden 11 und 12 bzw. den Anschlußkontakten 13 und 14 angebrachten, nicht näher bezeichneten Leiterbahnen. Ein dritter, mit einer Leiterbahn verbundener Anschlußkontakt 15 dient der Kontaktierung des Rahmens 4 und somit der Pendelmasse 7. Dabei erfolgt die leitende Verbindung zwischen der dem Anschlußkontakt 15 zugeordneten Leiterbahn und dem Schenkel 4a des Rahmens 4 durch Druckkontaktierung während des Bondens des Glas-Silizium-Glas-Schichtpaketes.

In dem Schenkel 4a des Rahmens 4 sind ferner den Leiterbahnen der Gegenelektroden 11 und 12 zugeordnete Freisparungen 16 und 17 ausgebildet, die der kurzschlußsicheren elektrischen Verbindung zwischen den Anschlußkontakten 13 und 14 und den Elektroden 11 und 12 dienen. Dabei muß eine dieser Verbindungen von der einen Glasplatte 3 auf die andere Glasplatte 2 umgelenkt werden, was mittels eines Siliziumblocks 18 erfolgt. Die mechanische Verbindung des Siliziumblocks 18 mit dem Rahmen 4 wird beim Vereinzeln des Glas-Silizium-Glas-Schichtpaketes abgebrochen und somit der Siliziumblock 18 auch elektrisch isoliert bzw. als Leiterbahnelement zwischen der Ebene des Anschlußkontaktes 13 und der auf der Glasplatte 3 befindlichen Gegenelektrode 11 freigestellt. Mit 19 und 20 sind die stehengebliebenen Teile der mechanischen Verbindungen zwischen einerseits einem Siliziumblock andererseits einem Rahmen benachbarter Beschleunigungssensoren bezeichnet.

Der für das Abdichten der Freisparungen 16 und 17 vorgesehene Klebstoff wird, wie Figur 2 zeigt, mittels eines geeigneten Dispensers 21 zugeführt, wobei die in Figur 2 dargestellte, für den Abdichtvorgang vorteilhafte Arbeitslage zwischen dem Beschleunigungssensor 1 und dem Dispenser 21 durch eine nicht dargestellte Vorrichtung vorgegeben ist. Mit 22 ist ein Klebstofftropfen bezeichnet, der sich entsprechend der Eintauchtiefe des Dispensers in einen Vorratsbehälter an der Spitze des Dispensers 21, abhängig von der Viskosität des Klebstoffs, bildet, wobei durch Versuch die benötigte Klebstoffmenge in der Größenordnung von 0,5 mm³ ermittelbar ist. Der Klebstofftropfen 22 wird an einer bestimmten Stelle des Beschleunigungssensors 1 angebracht und zwar bevorzugt an der Stelle, wo zwischen dem Siliziumblock 18 und dem Rahmen 4 ein von außen gut zugänglicher Spalt 23 ausgebildet ist. Infolge der durch den Spalt 23 und den zwischen dem Siliziumblock 18 und dem Schenkel 4a des Rahmens 4 bestehenden Spalt 24 erhöhten Kapillarwirkung, verteilt sich der angegebene Klebstofftropfen 22 relativ schnell in Richtung der Freisparungen 16 und 17, mit anderen Worten: Der Klebstoff wird sozusagen in die Spalte 23 und 24 hineingezogen. Dadurch werden die zu verschließenden Freisparungen 16 und 17 vom Klebstoff mit nur geringem Zeitversatz erreicht. Infolge der geringen Höhe der Freisparungen 16 und 17 ist die Verteilgeschwindigkeit in den Freisparungen verlangsamt, sodaß sie in etwa gleichzeitig geschlossen werden. Bei Erreichen eines Verteilstadiums des Klebstoffs gemäß Figur 3 wird der Klebstoff am Weiterfließen, das heißt Eindringen in den Pendelraum 5 gehindert, indem er mittels UV-Licht bestrahlt wird und dadurch aushärtet.

Wie bereits angedeutet, wird der Raum, in welchem das Abdichten der Beschleunigungssensoren erfolgt, zunächst evakuiert und dann mit trockenem Stickstoff geflutet. Nur auf diese Weise kann garantiert werden, daß sich der Pendelraum eines Beschleunigungssensors vor dessen Abdichten in relativ kurzer Zeit mit Schutzgas gefüllt hat. Selbstverständlich darf der verwendete Klebstoff kein Wasser aufnehmen, da sonst Feuchtigkeit über den Klebstoff in den Pendelraum diffundieren würde.

## Patentansprüche

1. Verfahren zum Abdichten herstellprozeßbedingter Öffnungen (16, 17) an mikromechanischen Beschleunigungssensoren (1), welche als Differentialkondensatoren in Form eines Glas-Silizium-Glas- Schichtpaketes hergestellt sind, wobei der Pendelmasse (7) eines aus der elektrischen leitend dotierten Siliziumschicht (4) herausstrukturierten Biegeschwingers (6) auf den innenliegenden Flächen der Glasschichten (2, 3) Gegenelektroden (11, 12) zugeordnet sind, welche mittels gleichflächig angebrachten Leiterbahnen mit außerhalb des Pendelraumes (5) ausgebildeten Anschlußkontakten (13, 14) elektrisch leitend verbunden sind, wobei in der den Pendelraum (5) umgebenden Siliziumschicht (4) Öffnungen (16, 17) bzw. relativ flache Freisparungen ausgebildet sind, welche einem kurzschlußsicheren Herausführen der Leiterbahnen aus dem Pendelraum (5) dienen,
dadurch gekennzeichnet,
daß zum Abdichten der Freisparungen (16, 17) ein mittels Licht aushärtbarer Klebstoff Anwendung findet, daß unter Ausnutzung von durch Kapillarkräfte verursachtem Klebstoffkriechen an einer bestimmten Stelle des Beschleunigungssensors (1) eine definierte Menge (22) des Klebstoffs aufgebracht wird und daß nach einer experimentell ermittelten Verteilzeit der Klebstoff durch Belichten ausgehärtet wird.

2. Verfahren nach Anspruch 1,
dadurch gekennzeichnet,
daß das Abdichten in einer Schutzgasatmosphäre vorgenommen wird und
daß der Pendelraum (5) des Beschleunigungssensors (1) vor dem Abdichten evakuiert wird.

## Claims

1. Method for sealing openings (16, 17) caused by the production process in micromechanical acceleration sensors (1) produced as differential capacitors in the form of a glass-silicon-glass layered package, the oscillating mass (7) of a flexural resonator (6) structured out of the electroconductively doped silicon layer (4) being assigned, on the inner surfaces of the glass layers (2, 3), counter-electrodes (11, 12) which are electroconductively connected, by means of strip conductors attached with the same area, to terminal contacts (13, 14) formed outside the oscillation space (5), there being formed in the silicon layer (4) surrounding the oscillation space (5) openings (16, 17) or relatively shallow recesses which serve for leading the strip conductors out of the oscillation space (5) in a short-circuit-proof manner,
characterised
in that a light-curable adhesive is used to seal the recesses (16, 17),
in that a defined quantity (22) of the adhesive is applied to a specific point of the acceleration sensor (1), with utilisation of adhesive migration caused by capillary forces, and
in that the adhesive is cured by exposure to light after an experimentally determined spreading time.

2. Method according to Claim 1,
characterised
in that the sealing is carried out in a protective-gas atmosphere, and
in that the oscillation space (5) of the acceleration sensor (1) is evacuated prior to the sealing.

## Revendications

1. Procédé pour le colmatage d'ouvertures (16, 17) dues au processus de fabrication sur des capteurs d'accélération micromécaniques (1) qui sont réalisés comme condensateurs différentiels sous forme d'un empilage de tranches verre-silicium-verre, à la masse pendulaire (7) d'un résonateur de flexions (6) exstructuré de la tranche de silicium (4) dotée pour être électriquement conductrice étant associées, sur les faces situées à l'intérieur des tranches de verre (2, 3), des contre-électrodes (11, 12) qui, au moyen de pistes conductrices disposées de manière isoédrique, sont électriquement reliées à des contacts de connexion (13, 14) formés à l'extérieur de l'espace pendulaire (5), des ouvertures (16, 17) ou des évidements relativement plats servant à faire sortir, sans risque de court-circuit, lesdites pistes conductrices dudit espace pendulaire étant pratiqués dans la tranche de silicium (4) entourant ledit espace pendulaire (5),
caractérisé par le fait
que, pour le colmatage des évidements (16, 17), il est fait usage d'une colle durcissable au moyen de lumière, que, en exploitant la progression de la colle causée par des forces capillaires, une quantité définie (22) de colle est appliquée à un endroit déterminé du capteurs d'accélération (1) et
que, après une durée de répartition déterminée expérimentalement, la colle est durcie par exposition à la lumière

2. Procédé selon la revendication 1,
caractérisé par le fait
que le colmatage est pratiqué dans une atmosphère protectrice et
que l'espace pendulaire (5) du capteur d'accélération (1) sera évacué avant le colmatage.
